# EUROPEAN PATENT SPECIFICATION

(11) **EP 4 159 299 B1**
(45) Date of publication and mention of the grant of the patent: **26.03.2025**
(21) Application number: 21813305.6
(22) Date of filing: 16.04.2021
(51) Int. Cl.: B01D 45/14, B04B 5/12

(54) **SEPARATION DEVICE AND SEPARATION SYSTEM**
TRENNVORRICHTUNG UND TRENNSYSTEM
DISPOSITIF ET SYSTÈME DE SÉPARATION

(30) Priority: 28.05.2020 JP 2020093723; 07.10.2020 JP 2020170048
(43) Date of publication of application: 05.04.2023
(73) Proprietor: Panasonic Intellectual Property Management Co., Ltd., Osaka-shi, Osaka 540-6207 (JP)
(72) Inventor: KAMAKURA, Masanao, Osaka 540-6207 (JP); HAYASAKI, Yoshiki, Osaka 540-6207 (JP); AKASAKA, Osamu, Osaka 540-6207 (JP); TSURUI, Shota, Osaka 540-6207 (JP)
(74) Representative: SSM Sandmair
(86) International application number: PCT/JP2021/015748
(87) International publication number: WO 2021/241063

(56) References cited:
- JP-A- 2020 032 339
- JP-U- S5 474 380
- JP-U- S51 159 083
- JP-U- S60 171 566
- US-A- 5 149 345
- US-A1- 2008 006 011

## Description

### Technical Field

The present disclosure relates to separation devices and separation systems, and specifically, to a separation device for separating solid substances contained in a gas from the gas and a separation system including the separation device.

### Background Art

Conventionally, known as a separation device is a centrifuge including a chamber having a cylindrical confinement wall and a driving rotor having a plurality of blades fixed to a shaft (Patent Literature 1).

The cylindrical confinement wall surrounds the shaft and is disposed coaxially with the shaft. Each blade is disposed between the shaft and the cylindrical confinement wall and is coupled to the shaft. The cylindrical confinement wall has an inlet opening (inlet), and an outlet opening (outlet), and a removal opening (discharge port). The removal opening is located closer to the outlet opening than to the inlet opening.

Separation devices are desired to be improved in their separative performance of separating solid substances contained in a gas from the gas.

### Citation List

### Patent Literature

Patent Literature 1: US 5149345 A

### Summary of Invention

It is an object of the present disclosure to provide a separation device and a separation system which are configured to improve separative performance of separating solid substances contained in a gas from the gas.

A separation device according to an aspect of the present disclosure includes a casing, a rotor, and a blade. The casing includes a tubular part having a circular inner peripheral shape. The rotor is disposed on an inner side of the tubular part and is rotatable around a rotation central axis extending along an axial direction of the tubular part. The blade is disposed between the tubular part and the rotor and is configured to rotate together with the rotor. The tubular part includes a gas inlet, a gas outlet, and a solid substance discharge port. The gas outlet is apart from the gas inlet in the axial direction and is in communicative connection with an inside and an outside of the tubular part between a first end and a second end of the tubular part in the axial direction. The solid substance discharge port is aligned with the gas outlet in a direction along an outer periphery of the tubular part. The blade has a first end adjacent to the gas inlet and a second end adjacent to the gas outlet. The casing has a space extending to the solid substance discharge port with respect to the second end of the blade in the axial direction. The separation device further includes a discharge tubular part. The discharge tubular part has an inner space in communicative connection with the solid substance discharge port and protrudes from an outer peripheral surface of the tubular part.

A separation system according to an aspect of the present disclosure includes the separation device and a driving device. The driving device is configured to rotationally drive the rotor.

### Brief Description of Drawings

FIG. 1 is a perspective view of a separation device according to an embodiment;
FIG. 2 is a sectional view of the separation device, wherein a rotation central axis is shown in this sectional view;
FIG. 3 is a cross-section view of the separation device, wherein this cross-section view corresponds to a cross-section surface along line A-A of FIG. 2;
FIG. 4 is a cross-section view of the separation device, wherein this cross-section view corresponds to a cross-section surface along line B-B of FIG. 2;
FIG. 5 is a schematic configuration diagram of a separation system including the separation device;
FIG. 6 is a view of a simulation result of a trajectory of a particle having a particle size of 2 µm with the separation device according to the embodiment;
FIG. 7A is a sectional view of a separation device of a first variation of the embodiment, wherein a rotation central axis is shown in this sectional view;
FIG. 7B is a cross-section view of the separation device of the first variation, wherein this cross-section view corresponds to a cross-section surface along line A-A of FIG. 7A;
FIG. 8A is a sectional view of a separation device of a second variation of the embodiment, wherein a rotation central axis is shown in this sectional view;
FIG. 8B is a cross-section view of the separation device of the second variation, wherein this cross-section view corresponds to a cross-section surface along line A-A of FIG. 8A;
FIG. 9 is a sectional view of a separation device of a third variation of the embodiment, wherein a rotation central axis is shown in this sectional view;
FIG. 10 is a sectional view of a separation device of a fourth variation of the embodiment, wherein a rotation central axis is shown in this sectional view;
FIG. 11 is a sectional view of a separation device of a fifth variation of the embodiment, wherein a rotation central axis is shown in this sectional view;
FIG. 12 is a sectional view of a separation device of a sixth variation of the embodiment, wherein a rotation central axis is shown in this sectional view; and
FIG. 13 is a sectional view of a separation device of a seventh variation of the embodiment, wherein a rotation central axis is shown in this sectional view.

### Description of Embodiments

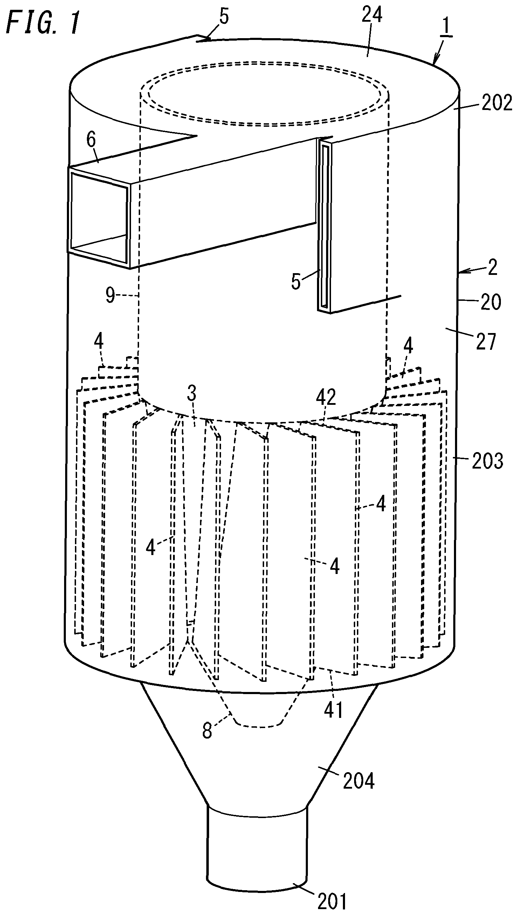

FIGS. 1 to 4 and FIGS. 6 to 13 described in the following embodiment and the like are schematic views, and the ratio of sizes and the ratio of thicknesses of components in the figures do not necessarily reflect actual dimensional ratios.

### (Embodiment)

A separation device 1 according to an embodiment and a separation system 10 including the separation device 1 will be described below with reference to FIGS. 1 to 6.

### (1) Overview

The separation device 1 is provided on an upstream side of, for example, an air conditioning facility having an air blowing function and is configured to separate solid substances in air (gas). The separation device 1 is installed on a rooftop of a facility (e.g., a dwelling house) having a flat roof or on ground. The air conditioning facility is, for example, an air blowing device configured to blow air from the upstream side to a downstream side. The air blowing device is, for example, an electric fan. The air conditioning facility is not limited to the air blowing device but may be, for example, a ventilating device, an air conditioner, an air supply cabinet fan, or an air conditioning system including an air blowing device and a heat exchanger. The flow rate of air caused by the air conditioning facility to flow to the separation device 1 is, for example, 50 m³/h to 500 m³/h. The outflow volume of air from the separation device 1 toward the air conditioning facility is substantially equal to the flow rate of air flowing through the air conditioning facility.

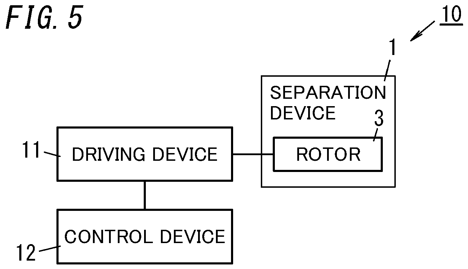

As shown in FIGS. 1 to 4, the separation device 1 includes a casing 2, a rotor 3, and a blade 4. Moreover, the separation system 10 includes the separation device 1 and a driving device 11 as shown in FIG. 5.

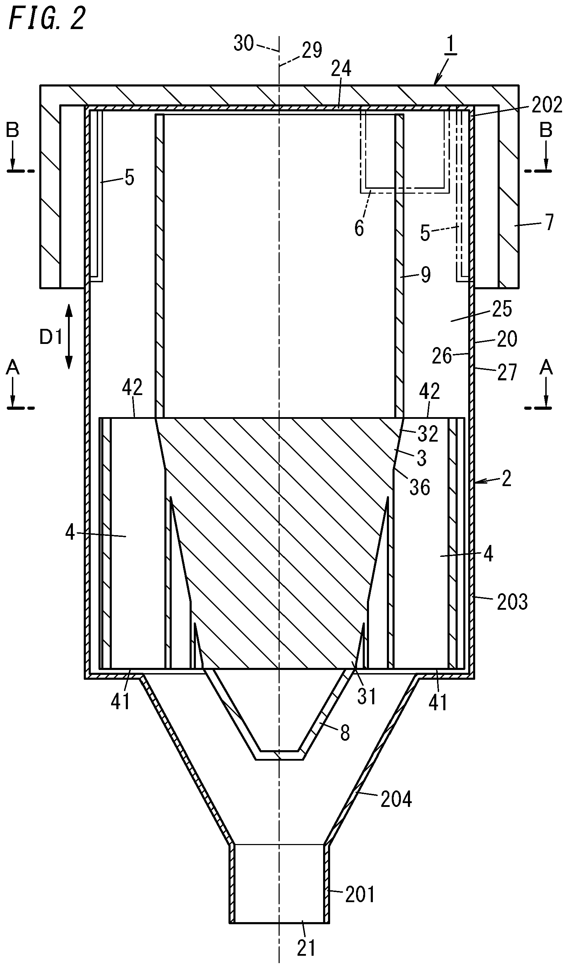

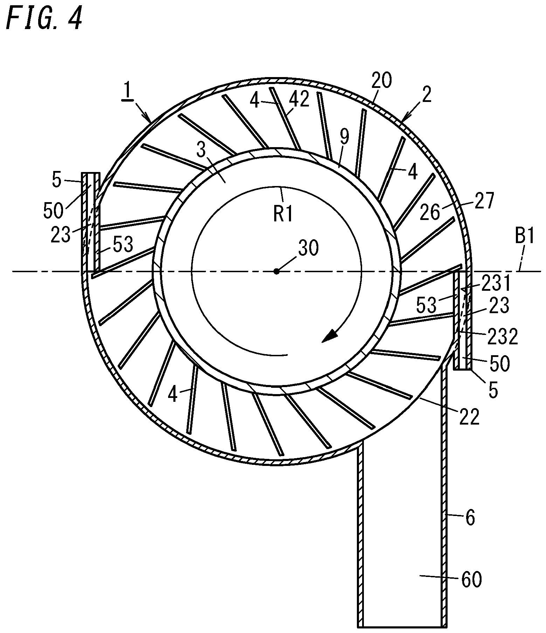

The casing 2 includes a tubular part 20. The tubular part 20 includes a gas inlet 21 (see FIG. 2), a gas outlet 22 (see FIG. 4), and a solid substance discharge port 23 (see FIG. 4). The rotor 3 is disposed on an inner side of the tubular part 20. The rotor 3 is rotatable around a rotation central axis 30 (FIG. 2). The blade 4 is disposed between the tubular part 20 and the rotor 3. The blade 4 rotates together with the rotor 3.

The solid substance discharge port 23 is a hole for discharging solid substances contained in, for example, air to an outer side of the casing 2. The solid substance discharge port 23 connects an inside space of the casing 2 and an outside space of the casing 2 to each other. In other words, the inside and the outside of the tubular part 20 are in communicative connection with each other via the solid substance discharge port 23. The separation device 1 generates, in the casing 2, an airflow swirling in the casing 2 when the rotor 3 rotates. In the separation device 1, part of a flow path from the gas inlet 21 toward the gas outlet 22 is formed between the casing 2 and the rotor 3.

The separation device 1 is configured to cause air flowing from the upstream side into the casing 2 to flow to the downstream side while the separation device 1 helically rotates the air around the rotor 3. In the present embodiment, "upstream side" means a side (primary side) from which an arrow representing an air-flowing direction is directed. Moreover, "downstream side" means a side (secondary side) to which the arrow representing the air-flowing direction is directed. The separation device 1 is used, for example in a posture where the gas outlet 22 is located above the gas inlet 21. In this case, the separation device 1 is configured such that air flowing through the gas inlet 21 formed in the casing 2 into the flow path is caused to helically rotate around the rotor 3 to move to the gas outlet 22.

The separation device 1 has the solid substance discharge port 23 in order to discharge the solid substances contained in the air flowing in the casing 2 to the outer side of the casing 2. Thus, at least some of the solid substances contained in the air flowing in the casing 2 through the gas inlet 21 of the tubular part 20 are discharged to the outer side of the casing 2 through the solid substance discharge port 23 in the course of passing through the flow path.

Moreover, the separation system 10 rotationally drives the rotor 3 by the driving device 11. That is, the driving device 11 rotates the rotor 3 around the rotation central axis 30. The driving device 11 includes, for example, a motor.

Examples of the solid substances in the air include fine particles and dust. Examples of the fine particles include particulate matter. Examples of the particulate matter include primary particles emitted directly to air as fine particles and secondary particles emitted to the air as a gas and formed into fine particles in the air. Examples of the primary particles include soil particles (e.g., yellow dust), powder dust, vegetal-origin particles (e.g., pollen), animal-origin particles (e.g., spores of mold), and soot. Examples of the particulate matter include PM1.0 and PM2.5 (fine particulate matters), PM10, and SPM (suspended particulate matter) classified based on their sizes. PM1.0 refers to fine particles passing through a sizing device with a collection efficiency of 50% at a particle size of 1.0 µm. PM2.5 refers to fine particles passing through a sizing device with a collection efficiency of 50% at a particle size of 2.5 µm. PM10 refers to fine particles passing through a sizing device with a collection efficiency of 50% at a particle size of 10 µm. SPM refers to fine particles passing through a sizing device with a collection efficiency of 100% at a particle size of 10 µm, and SPM corresponds to PM6.5 to PM7.0 and refers to fine particles slightly smaller than PM10.

### (2) Details

As described above, the separation device 1 includes the casing 2, the rotor 3, and the blade 4. The separation device 1 further includes a discharge tubular part 5. The separation device 1 further includes an outlet tubular part 6. The separation device 1 further includes an outer cover 7 (see FIG. 2). Moreover, the separation system 10 (see FIG. 5) includes the separation device 1 and the driving device 11.

A material for the casing 2 is, for example, but is not limited to, metal but may be a resin (e.g., ABS resin). Moreover, the casing 2 may include a metal part made of metal and a resin part made of a resin.

The casing 2 includes a tubular part 20 having a circular inner peripheral shape. Saying "having a circular inner peripheral shape" means that the shape along the inner periphery of the tubular part 20 is circular. The tubular part 20 has a circular shape in a direction along the outer periphery thereof. The tubular part 20 has a first end 201 and a second end 202 in an axial direction D1 (see FIG. 2). The casing 2 includes: the tubular part 20; and a bottom part 24 which closes an opening of the second end 202 of the tubular part 20. That is, in the separation device 1 according to the embodiment, the casing 2 has a bottomed tubular shape. In the tubular part 20, an opening of the first end 201 of tubular part 20 constitutes the gas inlet 21. Thus, the gas inlet 21 penetrates the tubular part 20 in the axial D1 of the tubular part 20.

In the tubular part 20, the outer diameter at the first end 201 is smaller than the outer diameter at a part 203 of the tubular part 20 surrounding the rotor 3 (hereinafter also referred to as a cylindrical part 203). In the axial direction D1 of the tubular part 20, the length of the cylindrical part 203 is greater than the length of the rotor 3. Each of the inner diameter and the outer diameter of the cylindrical part 203 is uniform over the entire length of the cylindrical part 203 in the axial direction D1 of the tubular part 20. Further, the tubular part 20 includes a part 204 (hereinafter also referred to as an expanding diameter portion 204) between the first end 201 and the cylindrical part 203. The inner diameter and the outer diameter of the part 204 gradually increase as the distance from the first end 201 increases. The outer diameter of the expanding diameter portion 204 is smaller than the inner diameter of the cylindrical part 203. The opening area of the expanding diameter portion 204 gradually increases as the distance from the gas inlet 21 increases in the axial direction D1 of the tubular part 20.

In the tubular part 20, the gas outlet 22 (see FIG. 4) is apart from the gas inlet 21 in the axial direction D1 (see FIG. 2) of the tubular part 20 and is in communicative connection with the inside and the outside of the tubular part 20 between the first end 201 and the second end 202 of the tubular part 20. The gas outlet 22 is formed along one direction intersecting the axial direction D1 of tubular part 20 in the vicinity of the bottom part 24 of the casing 2. In other words, the gas outlet 22 is open at a lateral side of the tubular part 20.

In the tubular part 20, the solid substance discharge port 23 (see FIG. 4) is apart from the gas inlet 21 in the axial direction D1 (see FIG. 2) of the tubular part 20 and is in communicative connection with the inside and the outside of the tubular part 20 between the first end 201 and the second end 202 of tubular part 20. The solid substance discharge port 23 is formed along one direction intersecting the axial direction D1 of tubular part 20 in the vicinity of the bottom part 24 of the casing 2. In other words, the solid substance discharge port 23 is open at a lateral side of the tubular part 20. The tubular part 20 includes a plurality (two) solid substance discharge ports 23. The two solid substance discharge ports 23 are apart from each other in the direction along the outer periphery of the tubular part 20. The two solid substance discharge ports 23 are aligned in one radial direction of the tubular part 20 when viewed in the axial direction D1 of the tubular part 20.

In the separation device 1, the opening width of the solid substance discharge port 23 is greater than the opening width of the gas outlet 22 in the axial direction D1 of the tubular part 20. Here, in the separation device 1, the distance between the solid substance discharge port 23 and the gas inlet 21 is shorter than the distance between the gas outlet 22 and the gas inlet 21 in the axial direction D1 of the tubular part 20. Further, in the separation device 1, in a direction along the axial direction D1 of the tubular part 20, the distance between the solid substance discharge port 23 and the blade 4 is shorter than the distance between the gas outlet 22 and the blade 4. Further, in the separation device 1, the opening width of the solid substance discharge port 23 is narrower than the opening width of the gas outlet 22 in the direction along the outer periphery of the tubular part 20.

The rotor 3 is disposed on the inner side of the tubular part 20 and is rotatable around the rotation central axis 30 extending along the axial direction D1 of the tubular part 20. The rotor 3 is disposed coaxially with the tubular part 20 on the inner side of the tubular part 20. Saying "disposed coaxially with the tubular part 20" means that the rotor 3 is disposed such that the rotation central axis 30 of the rotor 3 (see FIG. 2) is aligned with the central axis 29 of the tubular part 20 (see FIG. 2). The rotor 3 has, for example, in the axial direction D1 of the tubular part 20, a circular truncated cone shape whose outer diameter gradually increases as the distance from the gas inlet 21 increases, but the shape of the rotor 3 is not limited to this example. Here, the rotor 3 may have, for example, a bottomed tubular shape having a bottom wall adjacent to the gas inlet 21 or a columnar shape. When the rotor 3 has the bottomed tubular shape, the rotor 3 preferably includes a reinforcing wall on its inside. Examples of a material for the rotor 3 include a polycarbonate resin.

In a direction along the rotation central axis 30 of the rotor 3, the rotor 3 has a length less than the length of the cylindrical part 203 in the axial direction D1 of the tubular part 20.

The rotor 3 has a first end 31 adjacent to the gas inlet 21 and a second end 32 adjacent to the gas outlet 22. The rotor 3 is disposed closer to the expanding diameter portion 204 than to the bottom part 24 in the axial direction D1 of the tubular part 20. More particularly, the distance between the rotor 3 and the expanding diameter portion 204 is shorter than the distance between the rotor 3 and the bottom part 24 in the axial direction D1 of the tubular part 20.

The blade 4 is disposed between the tubular part 20 and the rotor 3 and rotates together with the rotor 3. In the separation device 1, a plurality of (here, 24) blades 4 are disposed between the tubular part 20 and the rotor 3. That is, the separation device 1 includes the plurality of blades 4. The plurality of blades 4 are connected to the rotor 3 and are apart from an inner peripheral surface 26 of the tubular part 20. The plurality of blades 4 rotate together with the rotor 3.

The plurality of blades 4 are provided to the rotor 3 over the entire length of the rotor 3 in the direction along the axial direction D1 of the tubular part 20. That is, the plurality of blades 4 are provided from the first end 31 to the second end 32 of the rotor 3. Examples of a material for the plurality of blades 4 include a polycarbonate resin. In the separation device 1, the same material is adopted for the rotor 3 and the plurality of blades 4, but this should not be construed as limiting the disclosure. The material for the rotor 3 and the material for the plurality of blades 4 may be different from each other. The plurality of blades 4 may be formed integrally with the rotor 3, or each of the plurality of blades 4 may be formed as members separated from the rotor 3 and may be fixed to the rotor 3, thereby being connected to the rotor 3.

Each of the plurality of blades 4 is disposed such that a gap is formed between each blade 4 and the tubular part 20 when viewed in the axial direction D1 of the tubular part 20. In other words, the separation device 1 has a gap between each of the plurality of blades 4 and the inner peripheral surface 26 of the tubular part 20. In the radial direction of the rotor 3, the distance between a protruding tip end of each of the plurality of blades 4 and an outer peripheral surface 36 of the rotor 3 is shorter than the distance between the outer peripheral surface 36 of the rotor 3 and the inner peripheral surface 26 of the tubular part 20.

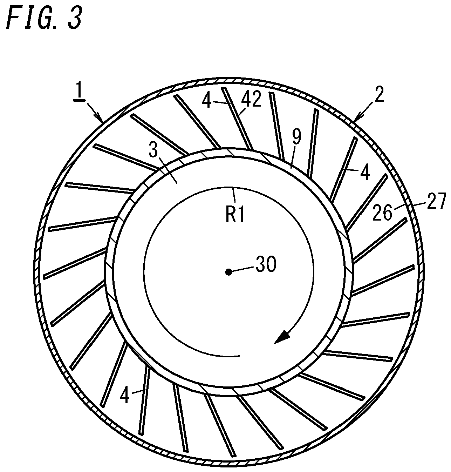

Each of the plurality of blades 4 is disposed in a space (the flow path) between the outer peripheral surface 36 of the rotor 3 and the inner peripheral surface 26 of the tubular part 20 to be parallel to the rotation central axis 30 of the rotor 3. Each of the plurality of blades 4 has a flat plate shape. Each of the plurality of blades 4 has a quadrangular shape elongated in the direction along the rotation central axis 30 of the rotor 3 viewed in a thickness direction defined with respect to each of the plurality of blades 4. Each of the plurality of blades 4 is tilted by a prescribed angle (e.g., 45 degrees) to one radial direction of the rotor 3 when viewed form the bottom part 24 of the casing 2 in the direction along the axial direction D1 of the tubular part 20. In this embodiment, each of the plurality of blades 4 has a tip end adjacent to the tubular part 20 and a base end adjoining the rotor 3, and the tip end is located rearward of the base end in a rotation direction R1 (see FIGS. 3 and 4) of the rotor 3 in a protrusion direction from the rotor 3. That is, in the separation device 1, each of the plurality of blades 4 is tilted to the one radial direction of the rotor 3 by the prescribed angle (e.g., 45 degrees) in the rotation direction R1 of the rotor 3. The prescribed angle is not limited to 45 degrees but may be an angle greater than 0 degree and less than or equal to 90 degrees. For example, the prescribed angle may be an angle within a range from 10 degrees to 80 degrees. Each of the plurality of blades 4 is not necessarily tilted with respect to the one radial direction of the rotor 3 by the prescribed angle in the rotation direction R1 of the rotor 3 but may have, for example, an angle of 0 degree with respect to the one radial direction of the rotor 3. That is, the plurality of blades 4 may radially extend from the rotor 3. As shown in FIG. 3, the plurality of blades 4 are disposed to be apart from each other at equal angular intervals in a circumferential direction of the rotor 3. The "equal angular interval" as used herein is not limited to only the case of a strictly equal angular interval but may be, for example, an angular interval within a prescribed error range (e.g., ±10% of the prescribed angular interval) with respect to a prescribed angular interval.

In the axial direction D1 of the tubular part 20, the length of each of the plurality of blades 4 is equal to the length of the rotor 3. The length of each of the plurality of blades 4 is not limited to the case of being equal to the length of the rotor 3 but may be greater, or may be less, than the length of the rotor 3.

In the axial direction D1 of the tubular part 20, the length of each of the plurality of blades 4 is less than the length of the cylindrical part 203.

Each of the plurality of blades 4 has a first end 41 adjacent to the gas inlet 21 and a second end 42 adjacent to the gas outlet 22 and the solid substance discharge port 23 in the axial direction D1 of the tubular part 20.

The casing 2 has a space 25 (see FIG. 2) between the second end 42 of each blade 4 and the solid substance discharge port 23 in the axial direction D1 of the tubular part 20. In the separation device 1, the solid substance discharge port 23 is at a location where the solid substance discharge port 23 overlaps the space 25 in a direction orthogonal to the rotation central axis 30. That is, the solid substance discharge port 23 is at a location where the solid substance discharge port 23 overlaps the space 25 in a direction orthogonal to the axial direction D1 of the tubular part 20. Moreover, in the separation device 1, the solid substance discharge port 23 is at a location where the solid substance discharge port 23 does not overlap each blade 4 in the direction orthogonal to the rotation central axis 30. That is, the solid substance discharge port 23 is at a location where the solid substance discharge port 23 does not overlap each blade 4 in the direction orthogonal to the axial direction D1 of the tubular part 20. In other words, each blade 4 is not in a projection area of the solid substance discharge port 23 when the tubular part 20 is viewed from the side.

In the separation device 1, the ratio of the length of the space 25 to the sum of the length of each blade 4 and the length of the space 25 in the axial direction D1 of the tubular part 20 is, for example, greater than or equal to 0.2 and less than or equal to 0.8 and is, for example, 0.55.

The separation device 1 includes the discharge tubular part 5 as described above. The discharge tubular part 5 is connected to a peripheral edge of the solid substance discharge port 23 (see FIG. 4), for example, at an outer peripheral surface 27 of the tubular part 20. The discharge tubular part 5 is a member for discharging solid substances contained in a gas. The discharge tubular part 5 has an inner space 50 (see FIG. 4) in communicative connection with the solid substance discharge port 23 and protrudes from the outer peripheral surface 27 of the tubular part 20. The discharge tubular part 5 has a rectangular tubular shape. Moreover, the discharge tubular part 5 has a part 53 extending inward of the tubular part 20 from the inner peripheral surface 26 of the tubular part 20. In other words, the part 53 of the discharge tubular part 5 is a part extending inward of the tubular part 20 from the inner peripheral surface 26 of tubular part 20 in the discharge tubular part 5. Of the discharge tubular part 5, the part protruding from the outer peripheral surface 27 of the tubular part 20 has an opening on an opposite side from the solid substance discharge port 23, and the opening has a rectangular shape whose longitudinal direction is the direction along the axial direction D1 of the tubular part 20. Of the discharge tubular part 5, the part extended in from the inner peripheral surface 26 of tubular part 20 has an opening on an opposite side from the solid substance discharge port 23, and the opening has a rectangular shape whose longitudinal direction is the direction along the axial direction D1 of the tubular part 20.

In the separation device 1, as shown in FIG. 4, an inner peripheral surface of the solid substance discharge port 23 of the tubular part 20 has an inner front surface 232 located frontward and an inner rear surface 231 located rearward in a direction along the rotation direction R1 of the rotor 3. The inner rear surface 231 is extended along one tangential direction of the inner peripheral surface 26 of tubular part 20 when viewed in the axial direction D1 of the tubular part 20. The discharge tubular part 5 protrudes in a direction along the one tangential direction when viewed in the axial direction D1 of the tubular part 20. The discharge tubular part 5 is at a location where the discharge tubular part 5 does not overlap the blades 4 in the direction orthogonal to the rotation central axis 30. The part 53 of the discharge tubular part 5 extends from the inner peripheral surface 26 of the tubular part 20 along the inner front surface 232 of the solid substance discharge port 23 to one center line B1 (see FIG. 4) of the tubular part 20. The one center line B1 is orthogonal to the rotation central axis 30 of the rotor 3 and is orthogonal to the axial direction of the discharge tubular part 5. The separation device 1 includes a plurality of (e.g., two) discharge tubular parts 5. The plurality of discharge tubular parts 5 are arranged to have revolution symmetry when viewed in the axial D1 of tubular part 20.

The separation device 1 includes the outlet tubular part 6 as described above. The outlet tubular part 6 is connected to a peripheral edge of the gas outlet 22, for example, at the outer peripheral surface 27 of the tubular part 20. The outlet tubular part 6 is a member for feeding the gas from which solid substances have been separated to the outer side of the casing 2. The outlet tubular part 6 has an inner space 60 in communicative connection with the gas outlet 22 and protrudes from the outer peripheral surface 27 of the tubular part 20. The outlet tubular part 6 has a rectangular tubular shape. In the outlet tubular part 6, an opening on an opposite side of the outlet tubular part 6 from the gas outlet 22 has a square shape, but the shape of the opening is not limited to this example.

In the separation device 1, the outlet tubular part 6 is adjacent to one discharge tubular part 5 of the two discharge tubular parts 5. The outlet tubular part 6 is located frontward of the discharge tubular part 5 adjacent thereto in the direction along the rotation direction R1 of the rotor 3.

In the separation device 1, the outlet tubular part 6 is, but not limited to be being, disposed parallel to the discharge tubular part 5 adjacent thereto when viewed in the axial direction D1 of the tubular part 20. For example, the outlet tubular part 6 may protrude in a direction along the one tangential direction of the inner peripheral surface 26 of tubular part 20.

The separation device 1 may further include a rectifying structure 8 (see FIGS. 1 and 2). The rectifying structure 8 is disposed between the gas inlet 21 and the rotor 3 inside the tubular part 20 and is configured to rectify a flow of a gas flowing into the tubular part 20. The rectifying structure 8 has, for example, a circular truncated cone shape and is disposed inside the expanding diameter portion 204. The rectifying structure 8 is disposed such that the central axis of the rectifying structure 8 coincides with the central axis 29 of the tubular part 20. Thus, in separation device 1, gas flowing through the gas inlet 21 into the tubular part 20 is easily introduced to allocation from the outer peripheral surface 36 of the rotor 3 in the radial direction of the rotor 3 but near the inner peripheral surface 26 of the tubular part 20. The rectifying structure 8 is connected to, for example, the rotor 3 and rotates together with the rotor 3, but the configuration of the rectifying structure 8 is not limited to this example. The rectifying structure 8 may be supported, for example, by the tubular part 20 via one or more beams.

The separation device 1 may further include a structure 9 disposed in the space 25 on a side apart from the gas inlet 21 when viewed from the rotor 3. The shape of the structure 9 is cylindrical but is not limited to this example. The structure 9 is disposed along the rotation central axis 30 of the rotor 3. The structure 9 may, but does not have to, be connected to the rotor 3. The structure 9 may rotate together with the rotor 3 or may rotate independently of the rotor 3. From the viewpoint of introducing an airflow into a space between the structure 9 and the cylindrical part 203 and suppressing turbulence of the airflow, the structure 9 preferably has a shape having revolution symmetry around the rotation central axis 30.

The outer cover 7 surrounds part of the casing 2. The outer cover 7 has a bottomed cylindrical shape. The inner diameter of the outer cover 7 is larger than the outer diameter of the tubular part 20. The outer cover 7 is located at least laterally to the second end 202 of the tubular part 20. The outer cover 7 suppresses solid substances discharged through the discharge tubular part 5 from being discharged laterally to the separation device 1.

As shown in FIG. 5, the separation system 10 includes the separation device 1 and the driving device 11 configured to rotationally drive the rotor 3 of the separation device 1. The driving device 11 includes, for example, a motor configured to rotationally drive the rotor. The driving device 11 may be configured such that a rotation shaft of the motor is directly or indirectly coupled to the rotor 3 or such that rotation of the rotation shaft of the motor is transmitted to the rotor 3 via a pulley and a rotary belt. The motor may be disposed on the inner side of the casing 2 or may be disposed on the outer side of the casing 2. The rotational velocity of the rotor 3 rotationally driven by the driving device 11 is, for example, 1500 rpm to 3000 rpm.

The separation system 10 further includes a control device 12 configured to control the driving device 11. The control device 12 includes a computer system. The computer system includes, as principal hardware components, a processor and memory. The processor executes a program stored in the memory of the computer system, thereby implementing functions as the control device 12. The program may be stored in advance in the memory of the computer system. Alternatively, the program may also be downloaded over a telecommunications network or be distributed after having been recorded in some non-transitory storage medium such as a memory card, an optical disc, or a hard disk drive, any of which is readable for the computer system. The processor of the computer system includes one or more electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very large-scale integrated circuit (VLSI), and an ultra large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. The plurality of electronic circuits may be collected on one chip or may be distributed on a plurality of chips. The plurality of chips may be collected in one device or may be distributed in a plurality of devices. As mentioned herein, the computer system includes a microcontroller including one or more processors and one or more memory elements. Thus, the microcontroller is also composed of one or more electronic circuits including a semiconductor integrated circuit or a large-scale integrated circuit.

### (3) Operation of Separation Device and Separation System

In the separation device 1 according to the embodiment, the rotation direction R1 (see FIGS. 3 and 4) of the rotor 3 is, for example, a clockwise direction when the rotor 3 is viewed from the bottom part 24 of the casing 2 in the axial direction D1 of the tubular part 20. The separation system 10 rotationally drives the rotor 3 by the driving device 11.

In the separation device 1, rotation of the rotor 3 enables force to be applied to air flowing in the inside space (flow path) of the casing 2 in a rotation direction around the rotation central axis 30. In the separation device 1, the rotation of the rotor 3 rotates the plurality of blades 4 together with the rotor 3, which results in that the velocity vector of the air flowing through the inside space of the casing 2 has a velocity component in a direction parallel to the rotation central axis 30 and a velocity component in the rotation direction around the rotation central axis 30. In sum, in the separation device 1, rotation of the rotor 3 and each blade 4 generates a swirling airflow in the casing 2. The swirling airflow is a three-dimensional helically rotating airflow.

In the separation device 1, solid substances contained in the air flowing in the casing 2 receive centrifugal force in a direction toward the inner peripheral surface 26 of the tubular part 20 from the rotation central axis 30 of the rotor 3 while the air helically rotates in the inside space of the casing 2. The solid substances receiving the centrifugal force move toward the inner peripheral surface 26 of the tubular part 20 and easily helically rotate along the inner peripheral surface 26 in the vicinity of the inner peripheral surface 26 of the tubular part 20. Then, in the separation device 1, some of the solid substances in the air pass through the solid substance discharge port 23 and are discharged through the discharge tubular part 5 in the course of passing through the inside space of the casing 2. The centrifugal force that acts on the solid substances is proportional to the mass of the solid substances. Thus, the solid substances having a relatively large mass are likely to reach the vicinity of the inner peripheral surface 26 of the tubular part 20 earlier than the solid substances having a relatively small mass.

In the separation device 1, an airflow swirling in the inner space of the casing 2 (swirling flow) is generated. Thus, in the separation device 1, some of the solid substances (e.g., dust) in the air flowing in the casing 2 through the gas inlet 21 of the tubular part 20 are discharged through the solid substance discharge port 23 and the discharge tubular part 5, and air (purified air) from which the solid substances have been separated (removed) flows out through the gas outlet 22 of the tubular part 20.

The separation device 1 has the space 25 in the casing 2. Thus, in the separation device 1, for example, even when an eddy flow is generated in a gap between two blades 4 adjacent to each other in the rotation direction R1 of the rotor 3 between the outer peripheral surface 36 of the rotor 3 and the inner peripheral surface 26 of the tubular part 20, the eddy flow is readily rectified into the helical airflow in the space 25 on the downstream side of each blade 4. Particles having a relatively large particle size tend to deviate from the airflow when receiving the centrifugal force, approach the inner peripheral surface 26 of the tubular part 20, and are easily discharged through the solid substance discharge port 23. In contrast, particles having a relatively small particle size strongly tend to move with the airflow, but in the separation device 1, the airflow is readily rectified into the helical airflow swirling along the inner peripheral surface 26 of the tubular part 20 in the space 25 on the downstream side of each blade 4, and thus, the particles having a relatively small particle size are also easily discharged through the solid substance discharge port 23.

Regarding separation characteristics of the separation device 1, the separation efficiency tends to increase as the rotational velocity of the rotor 3 increases. Moreover, regarding the separation characteristics of the separation device 1, the separation efficiency tends to increase as the separation particle size increases. In the separation device 1, for example, the rotational velocity of the rotor 3 is preferably set such that fine particles larger than or equal to a prescribed particle size are separated. The fine particles having the prescribed particle size are assumed to be, for example, particles having an aerodynamic diameter of 2 µm. The term "aerodynamic diameter" means the diameter of a particle which is in terms of aerodynamic behavior, equivalent to a spherical particle having a specific gravity of 1.0. The aerodynamic diameter is a particle size obtained from the sedimentation rate of a particle. Examples of the solid substances which are not separated by the separation device 1 and which remain in air include fine particles having a particle size smaller than the particle size of fine particles to be separated by the separation device 1 (in other words, fine particles having a mass smaller than the mass of the fine particles to be separated by the separation device 1).

### (4) Separating Performance of Separation Device

In the separation device 1 according to the embodiment, it was found from a result of simulation that the separation efficiency of 50% or greater is obtained for the fine particles having respective particle diameters of 2 µm, 2.3 µm, 3 µm, 3.7 µm, 5.5 µm, and 10 µm.

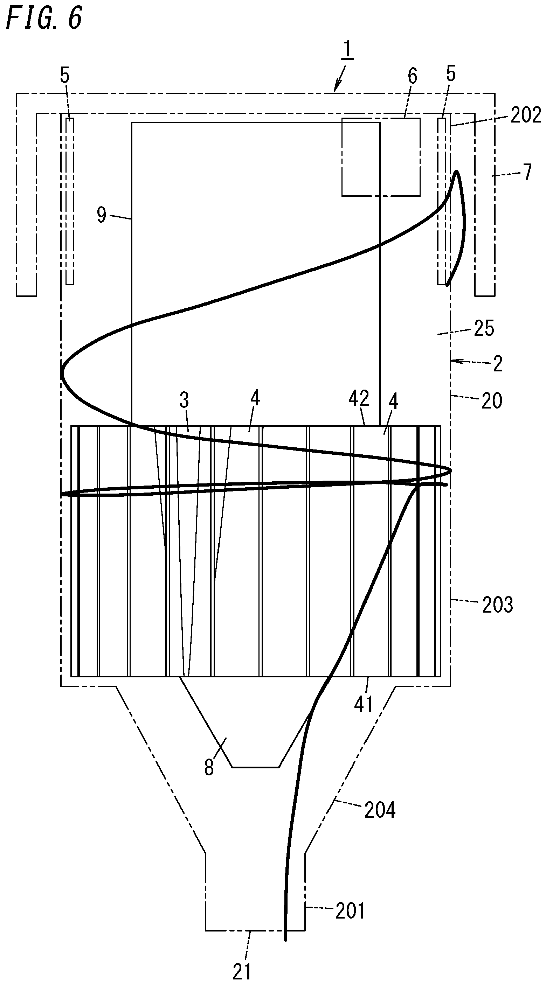

The airflow in the casing 2 of the separation device 1 can be inferred from a result of simulation performed by using, for example, fluid analysis software. As the fluid analysis software, for example, ANSYS(R) Fluent(R) may be adopted. For the separation device 1, the simulation results obtained by using the fluid analysis software were simulated by using software for particle trajectory analysis. As a method of the particle trajectory analysis, a Discrete Phase Model (DPM) may be adopted. In FIG. 6, an example of the trajectory of a particle having a particle diameter of 2 µm in the casing 2 of the separation device 1 according to the embodiment is shown in thick lines. FIG. 6 shows that the particle having a particle diameter of 2 µm is discharged through the solid substance discharge port 23.

### (5) Advantages

In the separation device 1 according to the embodiment, the casing 2 has a space 25 extending to the solid substance discharge port 23 with respect to the second end 42 of each blade 4 in the axial direction D1 of the tubular part 20. The separation device 1 further includes the discharge tubular part 5. The discharge tubular part 5 has the inner space 50 in communicative connection with the solid substance discharge port 23 and protrudes from the outer peripheral surface 27 of the tubular part 20.

The configuration described above enables the separative performance of the separation device 1 according to the embodiment to be improved.

### (6) Application Example of Separation Device

The separation device 1 is disposed on the upstream side of an air filter such as a high efficiency particulate air filter (HEPA filter) disposed on the upstream side of an air conditioning facility in an air purification system to be installed in, for example, a dwelling house. The "HEPA filter" is an air filter which has particle collection efficiency of higher than or equal to 99.77% of particles having a particle size of 0.3 µm at a rated flow rate and whose initial pressure loss is 245 Pa or less. For the air filter, a particle collection efficiency of 100% is not an essential condition. Providing the separation device 1 to the air purification system enables the air purification system to suppress the fine particles such as dust contained in air from reaching the air filter. Thus, the air purification system enables the life of, for example, an air filter provided on the downstream side of the separation device 1 to be prolonged. For example, the air purification system enables pressure loss to be suppressed from increasing due to an increase in gross mass of, for example, fine particles collected by the air filter. Thus, the air filter in the air purification system may be replaced with a reduced frequency. The configuration of the air purification system is not limited to a configuration in which the air filter and the air conditioning facility are housed in different housings, but the air filter may be provided in the housing of the air conditioning facility. In other words, the air conditioning facility may include an air filter in addition to the air blowing device.

### (7) Variations of Embodiment

The embodiment is a mere example of various embodiments of the present disclosure. Various modifications may be made to the embodiment depending on design and the like as long as the object of the present disclosure is achieved.

### (7.1) First Variation

In the separation device 1 according to the embodiment, when the rotor 3 and the structure 9 are integrally formed and the structure 9 is configured to rotate together with the rotor 3, the rotor 3 and the structure 9 are integrally formed by, for example, resin-molding or the like. For example, when the material for the rotor 3 and the material for the structure 9 are the same resin, the rotor 3 and the structure 9 can be integrally molded at the time of manufacturing the separation device 1. In the separation device 1 according to the embodiment, when the structure 9 is configured to rotate together with the rotor 3, a gap which is part of the space 25 is provided between the bottom part 24 of the casing 2 and the structure 9 as shown in FIG. 2. The gap length between the bottom part 24 and the structure 9 is, for example, about several millimeters.

In a configuration in which a gap is provided between the bottom part 24 and the structure 9 as in the case of the separation device 1 according to the embodiment, the flow velocity increases in the vicinity of the discharge tubular part 5, which may have influence of reducing the separation efficiency of the particles.

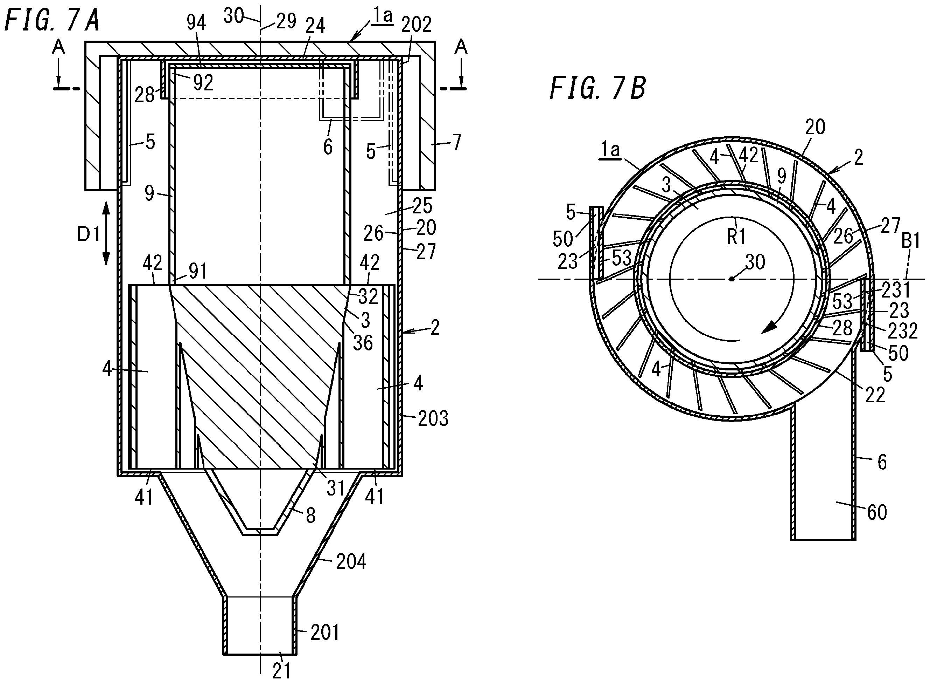

In contrast, a separation device 1a according to a first variation is different the separation device 1 according to the embodiment in that a projection 28 protruding from the bottom part 24 of the casing 2 toward the space 25 of the casing 2 is further provided as shown in FIGS. 7A and 7B. Regarding the separation device 1a according to the first variation, the same components as those of the separation device 1 of the embodiment are denoted by the same reference signs as those in the embodiment, and the description thereof is omitted as appropriate.

The projection 28 overlaps the structure 9 when viewed in a direction orthogonal to the rotation central axis 30 of the rotor 3.

In the separation device 1a according to the first variation, the projection 28 is located on an outer side of the structure 9 when viewed in a direction along the rotation central axis 30. The projection 28 is apart from the structure 9 in the direction orthogonal to the rotation central axis 30. The projection 28 is cylindrical. The inner diameter of the projection 28 which is cylindrical is larger than the outer diameter of the structure 9 which is cylindrical, and smaller than the inner diameter of the cylindrical part 203. From the viewpoint of suppressing turbulence of an airflow in the casing 2, the difference between the inner diameter of the projection 28 and the outer diameter of the structure 9 is preferably small. The projection 28 is cylindrical as described above and is disposed coaxially with the structure 9 which is cylindrical and the cylindrical part 203. In the direction orthogonal to the rotation central axis 30, the distance between the structure 9 and the projection 28 is shorter than the distance between the projection 28 and the tubular part 20. In the direction orthogonal to the rotation central axis 30, the distance between the projection 28 and the tubular part 20 is longer than the shortest distance between each of the plurality of blades 4 and the tubular part 20. The projection 28 overlaps part of each of the plurality of blades 4 when viewed in the direction along the rotation central axis 30.

From the viewpoint of suppressing the turbulence of the airflow in the casing 2, the shape of the structure 9 is preferably, but is not limited to being, cylindrical. Alternatively, the structure 9 may have a tubular shape other than the cylindrical shape. The structure 9 has a first end 91 adjacent to the rotor 3 in the direction along the rotation central axis 30 and a second end 92 adjacent to the bottom part 24 of the casing 2. From the viewpoint of suppressing the turbulence of the airflow in the casing 2, the separation device 1a preferably further includes a lid 94 for closing an opening of the second end 92 of the structure 9. The lid 94 has a disk shape. The lid 94 may be molded integrally with the structure 9 or may be formed separately from the structure 9 and integrated into the structure 9 by an adhesive, a fixing tool, or the like. The configuration of the separation device 1a is not limited to including the lid 94, but the separation device 1a may have a configuration without the lid 94.

Providing the separation device 1a according to the first variation with the projection 28 can increase the flow path resistance in the vicinity of a gap between the bottom 24 of the casing 2 and the structure 9 and can suppress gas from flowing into the gap. Thus, in the separation device 1a according to the first variation, the separation efficiency can be improved compared to that in the separation device 1 according to the embodiment.

### (7.2) Second Variation

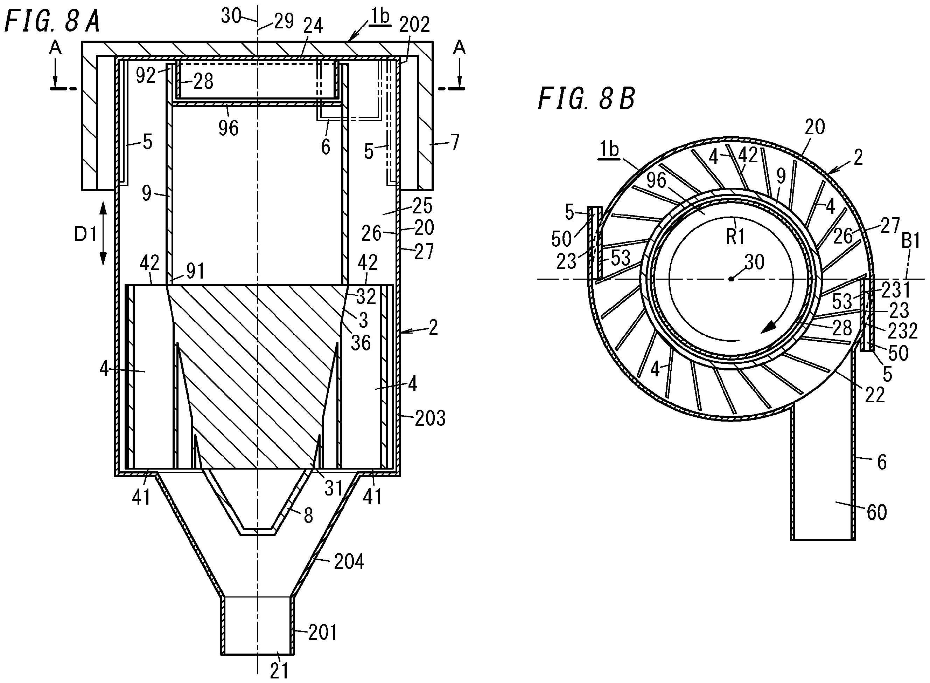

A separation device 1b according to a second variation is different from the separation device 1a according to the first variation in that the projection 28 is located on an inner side of the structure 9 when viewed in a direction along the rotation central axis 30 of the rotor 3 as shown in FIGS. 8A and 8B. In the separation device 1b according to the second variation, the same components as those of the separation device 1a of the first variation are denoted by the same reference signs as those in the first variation, and the description thereof is omitted as appropriate.

In the separation device 1b according to the second variation, the projection 28 is located on the inner side of the structure 9 when viewed in the direction along the rotation central axis 30. The projection 28 is apart from the structure 9 in a direction orthogonal to the rotation central axis 30. The outer diameter of the projection 28 which is cylindrical is smaller than the inner diameter of the structure 9 which is cylindrical. From the viewpoint of suppressing turbulence of an airflow in the casing 2, the difference between the outer diameter of the projection 28 and the inner diameter of the structure 9 is preferably small. The projection 28 is cylindrical as described above and is disposed coaxially with the structure 9 which is cylindrical and the cylindrical part 203.

The separation device 1b according to the second variation further includes a partition wall 96 disposed in the structure 9 and facing the projection 28 in the direction along the rotation central axis 30 of the rotor 3. The partition wall 96 has a disk shape. The partition wall 96 has an outer peripheral part which is connected along the entire circumference to an inner peripheral surface of the structure 9. In the direction along the rotation central axis 30 of the rotor 3, the distance between the partition wall 96 and the second end 92 of the structure 9 is shorter than the distance between the partition wall 96 and the first end 91 of the structure 9. Part of the projection 28 is housed in a space surrounded by the structure 9 and the partition wall 96 at the side of the second end 92 of the first end 91 and the second end 92 of the structure 9.

In the separation device 1b according to the second variation, the projection 28 is disposed inside the structure 9 when viewed in the direction along the rotation central axis 30, and thereby, the separation efficiency can be improved compared to that in the case of the projection 28 being disposed outside the structure 9 as in the case of the separation device 1a according to first variation.

### (7.3) Third Variation

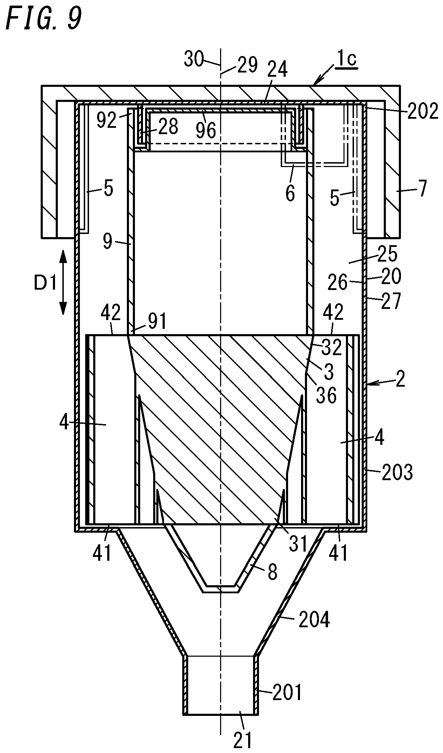

A separation device 1c according to a third variation is different from the separation device 1b according to the second variation in that a part of the partition wall 96 is formed along an inner peripheral surface of the projection 28 as shown in FIG. 9. In the separation device 1c according to the third variation, the same components as those of the separation device 1b of the second variation are denoted by the same reference signs as those in the second variation, and the description thereof is omitted as appropriate.

In the separation device 1c according to the third variation, the distance between a center part of the partition wall 96 and the bottom part 24 of the casing 2 is shorter than the distance between the center part of the partition wall 96 and the bottom part 24 of the casing 2 in the separation device 1b according to the second variation in a direction along the rotation central axis 30 of the rotor 3.

In the separation device 1c according to the third variation, part of the partition wall 96 is formed along the inner peripheral surface of the projection 28, and thereby, an airflow can be suppressed from entering a gap between the center part of the partition wall 96 and the bottom part 24 of the casing 2 compared to the separation device 1b according to the second variation. Thus, in the separation device 1c according to the third variation, the airflow can be further suppressed from being turbulent, and the separation efficiency can be improved compared to that in the separation device 1b according to the second variation.

### (7.4) Fourth Variation

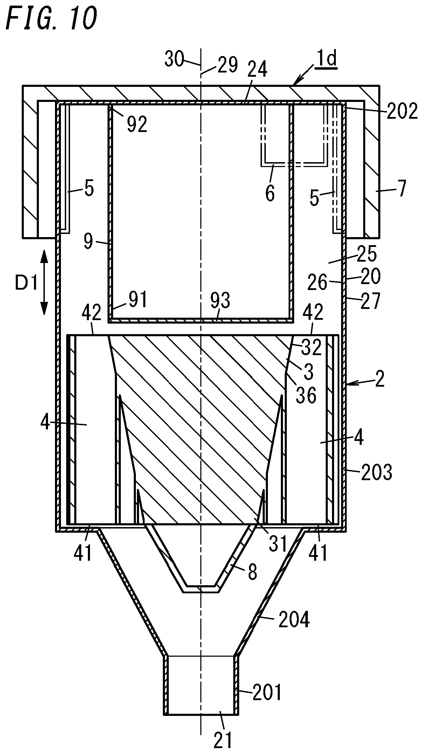

A separation device 1d according to a fourth variation is different from the separation device 1 according to the embodiment in that the structure 9 is integrally formed with the casing 2 and that the structure 9 and the rotor 3 are apart from each other as shown in FIG. 10. In the separation device 1d according to the fourth variation, the same components as those of the separation device 1 of the embodiment are denoted by the same reference signs as those in the embodiment, and the description thereof is omitted as appropriate.

In the separation device 1d according to the fourth variation, the structure 9 is connected to the bottom 24 of the casing 2. Further, in the separation device 1d according to the fourth variation, the structure 9 is apart from the rotor 3 and the plurality of blades 4 in a direction along the rotation central axis 30, so that the structure 9 does not rotate even when the rotor 3 rotates. From the viewpoint of suppressing turbulence of an airflow in the casing 2, the separation device 1d preferably further includes a lid 93 for closing an opening of the first end 91 of the structure 9. The lid 93 has a disk shape. The lid 93 may be molded integrally with the structure 9 or may be formed separately from the structure 9 and integrated into the structure 9 by an adhesive, a fixing tool, or the like. The configuration of the separation device 1d is not limited to including the lid 93, but the separation device 1d may have a configuration without the lid 93.

The structure 9 may be molded integrally with the casing 2 or may be formed separately from the casing 2 and integrated into the casing 2 by an adhesive, a fixing tool, or the like.

In the separation device 1d according to the fourth variation, a gap does not have to be provided between the structure 9 and the bottom part 24 of the casing 2 in the direction along the rotation central axis 30, and the separation efficiency can be improved compared to that in the separation device 1 according to the embodiment.

### (7.5) Fifth Variation

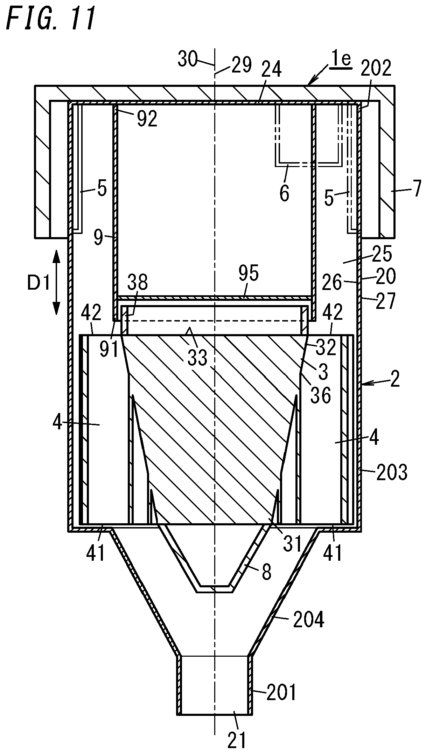

A separation device 1e according to a fifth variation is different from the separation device 1d according to the fourth variation in that part of the structure 9 overlaps part of the rotor 3 when viewed in a direction orthogonal to the rotation central axis 30 of the rotor 3 as shown in FIG. 11. In the separation device 1e according to the fifth variation, the same components as those of the separation device 1d of the fourth variation are denoted by the same reference signs as those in the fourth variation, and the description thereof is omitted as appropriate.

In the separation device 1e according to the fifth variation, the rotor 3 has a projection 38 which is cylindrical. The projection 38 protrudes toward the bottom part 24 from an outer peripheral part of a surface 33 of the rotor 3. The surface 33 has a circular shape and faces the bottom part 24 of the casing 2. In the separation device 1e according to the fifth variation, the inner diameter of the structure 9 is larger than the outer diameter of the projection 38 of the rotor 3. From the viewpoint of suppressing turbulence of an airflow in the casing 2, the difference between the outer diameter of the projection 38 and the inner diameter of the structure 9 is preferably small. In the axial direction D1 of the tubular part 20, the length of the projection 38 is shorter than the length of the structure 9. Further, in the axial direction D1 of the tubular part 20, the length of the projection 38 is greater than the distance between a plane including the surface 33 of the rotor 3 and a plane including an end face of the first end 91 of the structure 9.

The separation device 1e according to the fifth variation further includes a partition wall 95. The partition wall 95 is disposed in the structure 9 and faces the projection 38 in a direction along the rotation central axis 30 of the rotor 3. The partition wall 95 has a disk shape. The partition wall 95 has an outer peripheral part which is connected along the entire circumference to an inner peripheral surface of the structure 9. In the direction along the rotation central axis 30 of the rotor 3, the distance between the partition wall 95 and the first end 91 of the structure 9 is shorter than the distance between the partition wall 95 and the second end 92 of the structure 9. Part of the projection 38 is housed in a space surrounded by the structure 9 and the partition wall 95 at the side of the first end 91 of the first end 91 and the second end 92 of the structure 9.

In the separation device 1e according to the fifth variation, part of the structure 9 overlaps part of the rotor 3 when viewed in the direction orthogonal to the rotation central axis 30. Thus, in the separation device 1e according to the fifth variation, the airflow can be suppressed from being turbulent, and the separation efficiency can be improved compared to that in the separation device 1d according to the fourth variation.

### (7.6) Sixth Variation

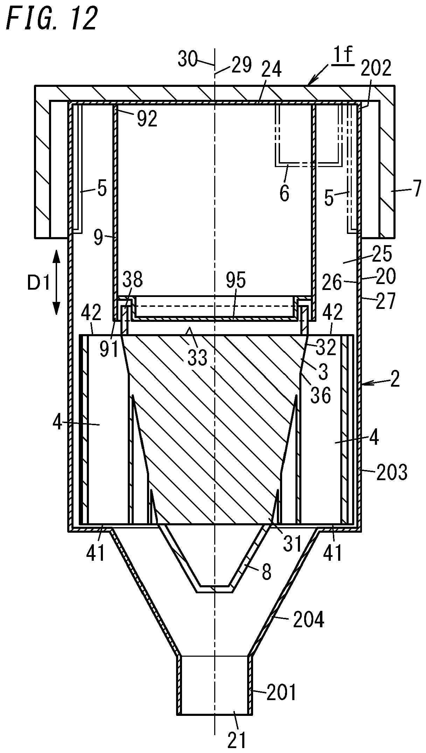

A separation device 1f according to a sixth variation is different from the separation device 1e according to the fifth variation in that part of the partition wall 95 has a shape along an inner peripheral surface of the projection 38 as shown in FIG. 12. In the separation device 1f according to the sixth variation, the same components as those of the separation device 1e of the fifth variation are denoted by the same reference signs as those in the fifth variation, and the description thereof is omitted as appropriate.

In the separation device 1f according to the sixth variation, the distance between a center part of the partition wall 95 and the surface 33 of the rotor 3 is shorter than the distance between the center part of the partition wall 95 and the surface 33 of the rotor 3 in the separation device 1e according to the fifth variation in a direction along the rotation central axis 30 of the rotor 3.

In the separation device 1f according to the sixth variation, part of the partition wall 95 has a shape along the inner peripheral surface of the projection 38, and thereby, an airflow can be suppressed from entering a gap between the center part of the partition wall 95 and surface 33 of the rotor 3 compared to the separation device 1e according to the fifth variation. Thus, in the separation device 1f according to the sixth variation, the airflow can be further suppressed from being turbulent, and the separation efficiency can be improved compared to that in the separation device 1e according to the fifth variation.

### (7.7) Seventh Variation

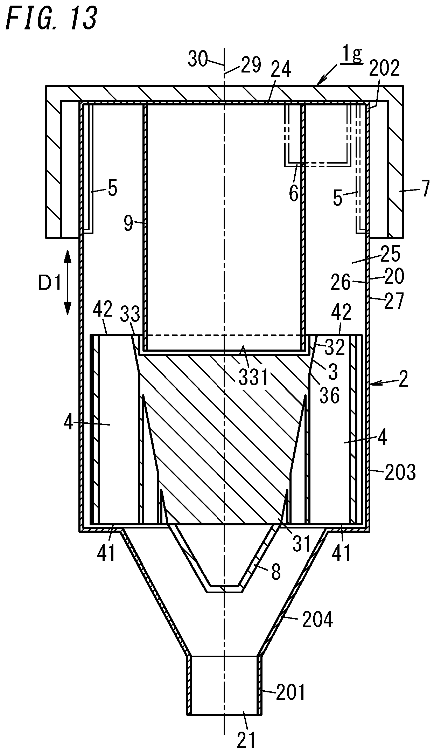

A separation device 1g according to a seventh variation is different from the separation device 1d according to the fourth variation in that part of the structure 9 is disposed on an inner side of the rotor 3 when viewed in a direction along the rotation central axis 30 as shown in FIG. 13. In the separation device 1g according to the seventh variation, the same components as those of the separation device 1d of the fourth variation are denoted by the same reference signs as those in the fourth variation, and the description thereof is omitted as appropriate.

The separation device 1g according to the seventh variation has a recess 331 formed in a surface 33 of the rotor 3. The surface 33 faces the bottom 24 of the casing 2 and is circular. Part of the structure 9 is housed in the recess 331. The shape and the dimension of an opening of the recess 331 are determined such that the structure 9 does not interfere with the rotation of the rotor 3. The opening of the recess 331 has a circular shape. The inner diameter of the opening of the recess 331 is larger than the outer diameter of the structure 9. In the direction along the rotation central axis 30, a gap is provided between the structure 9 and a bottom surface of the recess 331.

In the separation device 1g according to the seventh variation, part of the structure 9 is located on the inner side of the rotor 3 when viewed in the direction along the rotation central axis 30. Thus, in the separation device 1g according to the seventh variation, the airflow can be suppressed from being turbulent, and the separation efficiency can be improved compared to that in the separation device 1d according to the fourth variation.

In the separation device 1g according to the seventh variation, the rotor 3 may have a tubular shape capable of housing part of the structure 9 instead of forming the recess 331 in the rotor 3.

### (7.8) Other Variations

For example, the tubular part 20 of separation device 1 may include a plurality of gas outlets 22. In this case, the separation device 1 may include a plurality of outlet tubular parts 6. Further, the separation device 1 does not have to include the outlet tubular part 6.

Further, in the separation device 1 according to the embodiment, the gas inlet 21 penetrates the tubular part 20 in the axial direction D1 of the tubular part 20 (surface including the gas inlet 21 intersects the axial direction D1), but this should not be interpreted as limiting. The surface including the gas inlet 21 may orthogonally intersect the direction orthogonal to the axial direction D1 of the tubular part 20.

Moreover, the solid substance discharge port 23 is not limited to being at a location where the solid substance discharge port 23 does not overlap the blades 4 in the direction orthogonal to the rotation central axis 30. The solid substance discharge port 23 may be at a location where the solid substance discharge port 23 at least partially overlaps the blades 4 in the direction orthogonal to the rotation central axis 30. In this case, as viewed in the axial direction D1 of the tubular part 20 (i.e., as viewed in the direction along the rotation central axis 30), the solid substance discharge port 23 does not overlap with any of the plurality of blades 4. In this case, for example, the protruding length of the plurality of blades 4 from the outer peripheral surface 36 of the rotor 3 is determined such that each blade 4 does not collides with a peripheral edge of the solid substance discharge port 23.

The casing 2 of the separation device 1 may have a solid substance discharge port 23 disposed not to overlap the blades 4 in the direction orthogonal to the rotation central axis 30 and a solid substance discharge port disposed to overlap the blades 4 in the direction orthogonal to the rotation central axis 30.

The tubular part 20 does not necessarily include a plurality of solid substance discharge ports 23 but may have one solid substance discharge port.

Moreover, the plurality of solid substance discharge ports 23 are not limited to having the same shape but may have different shapes.

Moreover, each of the plurality of blades 4 has a tip end adjacent to the tubular part 20 and a base end adjoining the rotor 3, and the tip end may be located frontward of the base end in the rotation direction R1 of the rotor 3 in the protrusion direction from the rotor 3.

Moreover, each of the plurality of blades 4 may have a shape having one or more curved portions in the shape of, for example, an arc.

Moreover, each of the plurality of blades 4 may have a helical shape around the rotation central axis 30 of the rotor 3. Here, "helical" is not limited to a helical shape with one or more turns but includes a shape corresponding to part of the helical shape with one turn.

Moreover, the rotor 3 may include a plurality of rotary members. In this case, in the rotor 3, for example, the rotary members aligned in a direction along the central axis 29 of the tubular part 20 are coupled to each other.

Moreover, the gas flowing through the gas inlet 21 of the tubular part 20 into the casing 2 is not limited to air but may be, for example, exhaust gas.

Moreover, the separation device 1 according to the embodiment may further include a lid 94 for closing an opening of a second end 92 of the structure 9 as in the case of the separation device 1a according to the first variation.

### (Aspects)

The present specification discloses the following aspects.

A separation device (1; 1a; 1b; 1c; 1d; 1e; 1f; 1g) of a first aspect includes a casing (2), a rotor (3), and a blade (4). The casing (2) includes a tubular part (20) having a circular inner peripheral shape. The rotor (3) is disposed on an inner side of the tubular part (20) and is rotatable around a rotation central axis (30) extending along an axial direction (D1) of the tubular part (20). The blade (4) is disposed between the tubular part (20) and the rotor (3) and is configured to rotate together with the rotor (3). The tubular part (20) includes a gas inlet (21), a gas outlet (22), and a solid substance discharge port (23). The gas outlet (22) is apart from the gas inlet (21) in the axial direction and is in communicative connection with an inside and an outside of the tubular part (20) between a first end (201) and a second end (202) of the tubular part (20) in the axial direction. The solid substance discharge port (23) is aligned with the gas outlet (22) in a direction along an outer periphery of the tubular part (20). The blade (4) has a first end (41) adjacent to the gas inlet (21) and a second end (42) adjacent to the gas outlet (22). The casing (2) has a space (25) extending to the solid substance discharge port (23) with respect to the second end (42) of the blade (4) in the axial direction (D1). The separation device (1; 1a; 1b; 1c; 1d; 1e; 1f; 1g) further includes a discharge tubular part (5). The discharge tubular part (5) has an inner space (50) in communicative connection with the solid substance discharge port (23) and protrudes from an outer peripheral surface (27) of the tubular part (20).

In the separation device (1; 1a; 1b; 1c; 1d; 1e; 1f; 1g) of the first aspect, the separative performance of separating solid substances contained in a gas from the gas is improved.

In a separation device (1; 1a; 1b; 1c; 1d; 1e; 1f; 1g) of a second aspect referring to the first aspect, the solid substance discharge port (23) of the tubular part (20) has an inner peripheral surface having an inner rear surface (231) located rearward and an inner front surface (232) located frontward in a direction along a rotation direction (R1) of the rotor (3). The inner rear surface

(231) is extended along one tangential direction of an inner peripheral surface (26) of the tubular part (20) when viewed in the axial direction (D1) of the tubular part (20). The discharge tubular part (5) protrudes in a direction along the one tangential direction when viewed in the axial direction (D1) of the tubular part (20).

The separation device (1; 1a; 1b; 1c; 1d; 1e; 1f; 1g) of the second aspect facilitates discharge of the solid substances contained in the gas through the solid substance discharge port (23) and the discharge tubular part (5).

A separation device (1; 1a; 1b; 1c; 1d; 1e; 1f; 1g) of a third aspect referring to the first or second aspect further includes an outlet tubular part (6). The outlet tubular part (6) has an inner space (60) in communicative connection with the gas outlet (22) and protrudes from the outer peripheral surface (27) of the tubular part (20).

The separation device (1; 1a; 1b; 1c; 1d; 1e; 1f; 1g) of the third aspect facilitates the flow of the gas, from which the solid substances have been separated, through the gas outlet (22) and the outlet tubular part (6).

In a separation device (1; 1a; 1b; 1c; 1d; 1e; 1f; 1g) of a fourth aspect referring to any one of the first to third aspects, the discharge tubular part (5) is at a location where the discharge tubular part (5) does not overlap the blade (4) in a direction orthogonal to the rotation central axis (30).

In the separation device (1; 1a; 1b; 1c; 1d; 1e; 1f; 1g) of the fourth aspect, the separation efficiency is improved compared to that in the case of the solid substance discharge port (23) being located at a location where the solid substance discharge port (23) at least partially overlaps the blade (4) in the direction orthogonal to the rotation central axis (30).

A separation device (1; 1a; 1b; 1c; 1d; 1e; 1f; 1g) of a fifth aspect is based on any one of the first to fourth aspects. In the separation device (1; 1a; 1b; 1c; 1d; 1e; 1f; 1g), the solid substance discharge port (23) has an opening width greater than an opening width of the gas outlet (22) in the axial direction (D1) of the tubular part (20).

In the separation device (1; 1a; 1b; 1c; 1d; 1e; 1f; 1g) of the fifth embodiment, the separation efficiency is improved compared to that in the case of the opening width of the solid substance discharge port (23) being narrower than or equal to the opening width of the gas outlet (22) in the axial direction (D1) of tubular part (20).

A separation device (1; 1a; 1b; 1c; 1d; 1e; 1f; 1g) of a sixth aspect is based on the fifth aspect. In the separation device (1; 1a; 1b; 1c; 1d; 1e; 1f; 1g), a distance between the solid substance discharge port (23) and the blade (4) is shorter than a distance between the gas outlet (22) and the blade (4) in a direction along the axial direction (D1).

In the separation device (1; 1a; 1b; 1c; 1d; 1e; 1f; 1g) of the sixth aspect, the separation efficiency is improved is improved.

A separation device (1; 1a; 1b; 1c; 1d; 1e; 1f; 1g) of a seventh aspect is based on the fifth or sixth aspect. In the separation device (1; 1a; 1b; 1c; 1d; 1e; 1f; 1g), the opening width of the solid substance discharge port (23) is narrower than the opening width of the gas outlet (22) in the direction along the outer periphery of the tubular part (20).

In the separation device (1; 1a; 1b; 1c; 1d; 1e; 1f; 1g) of the seventh aspect, pressure loss is suppressed.

In a separation device (1; 1a; 1b; 1c; 1d; 1e; 1f; 1g) of an eighth aspect referring to any one of the first to seventh aspects, the tubular part (20) includes a plurality of the solid substance discharge ports (23). The separation device (1; 1a; 1b; 1c; 1d; 1e; 1f; 1g) includes a plurality of the discharge tubular parts (5).

In the separation device (1; 1a; 1b; 1c; 1d; 1e; 1f; 1g) of the eighth aspect, the separation efficiency is improved is improved.

In a separation device (1; 1a; 1b; 1c; 1d; 1e; 1f; 1g) of a ninth aspect referring to the eighth aspect, the discharge tubular parts (5) are arranged to have revolution symmetry when viewed in the axial direction (D1) of the tubular part (20).

In the separation device (1; 1a; 1b; 1c; 1d; 1e; 1f; 1g) of the ninth aspect, an airflow is suppressed from being turbulent, and the separation efficiency is improved is improved.

A separation device (1; 1a; 1b; 1c; 1d; 1e; 1f; 1g) of a tenth aspect referring to any one of the first to ninth aspects further includes a rectifying structure (8). The rectifying structure (8) is disposed between the gas inlet (21) and the rotor (3) on the inner side of the tubular part (20) and is configured to rectify a flow of a gas flowing in through the gas inlet (21).

The separation device (1; 1a; 1b; 1c; 1d; 1e; 1f; 1g) of the tenth aspect is capable of rectifying the flow of gas flowing into the tubular part (20).

In a separation device (1; 1a; 1b; 1c; 1d; 1e; 1f; 1g) of an eleventh aspect referring to any one of the first to tenth aspects, the gas inlet (21) penetrates the tubular part (20) in the axial direction (D1).

In the separation device (1; 1a; 1b; 1c; 1d; 1e; 1f; 1g) of the eleventh aspect, pressure loss can be suppressed.

A separation device (1; 1a; 1b; 1c; 1d; 1e; 1f; 1g) of a twelfth aspect referring to any one of the first to eleventh aspects further includes a structure (9). The structure (9) is disposed along the rotation central axis (30) of the rotor (3). At least part of the structure (9) is disposed in the space (25).

In the separation device (1; 1a; 1b; 1c; 1d; 1e; 1f; 1g) of the twelfth aspect, the separation efficiency is improved is improved.

In a separation device (1a; 1b; 1c) of a thirteenth aspect referring to the twelfth aspect, the casing 2 includes a bottom part (24) which closes an opening of the second end (202) of the tubular part (20). The structure (9) is integrated with the rotor (3). The separation device (1a; 1b; 1c) further includes a projection (28). The projection (28) protrudes from the bottom part (24) of the casing (2) toward the space (25) of the casing (2). The projection (28) overlaps the structure (9) when viewed in a direction orthogonal to the rotation central axis (30).

In the separation device (1a; 1b; 1c) of the thirteenth aspect, the separation efficiency is improved is improved.

In a separation device (1b; 1c) of a fourteenth aspect referring to the thirteenth aspect, the structure (9) is tubular. the projection (28) is disposed inside the structure (9) when viewed in a direction along the rotation central axis (30).

In the separation device (1b; 1c) of the fourteenth aspect, the separation efficiency is improved compared to that in the case of the projection (28) being disposed outside the structure (9) when viewed in the direction along the rotation central axis (30).

In a separation device (1d; 1e; 1f; 1 g) of a fifteenth aspect referring to the twelfth aspect, the structure (9) is integrated with the casing (2). The structure (9) and the rotor (3) are apart from each other.

In the separation device (1d; 1e; 1f; 1g) of the fifteenth aspect, the separation efficiency is improved is improved.

In a separation device (1e; 1f; 1g) of a sixteenth aspect referring to the fifteenth aspect, part of the structure (9) overlaps part of the rotor (3) when viewed in a direction orthogonal to the rotation central axis 30.

In the separation device (1e; 1f; 1g) of the sixteenth aspect, the separation efficiency is improved is improved.

In the separation device (1g) of the seventeenth aspect referring to the sixteenth aspect, part of the structure (9) is disposed inside the rotor (3) when viewed in a direction along the rotation central axis (30).

In the separation device (1g) of the seventeenth aspect, the separation efficiency is improved.

The constituent elements of the second to seventeenth aspects are not essential constituent elements for the separation device (1; 1a; 1b; 1c; 1d; 1e; 1f; 1g) and may thus be omitted as appropriate.

A separation system (10) of an eighteenth aspect includes the separation device (1; 1a; 1b; 1c; 1d; 1e; 1f; 1g) of any one of the first to seventeenth aspects, and a driving device (11). The driving device (11) is configured to rotationally drive the rotor (3).

In the separation system (10) of the eighteenth aspect, the separative performance of separating solid substances contained in a gas from the gas is improved.

### Reference Signs List

- 1, 1a, 1b, 1c, 1d, 1e, 1f, 1g: Separation Device
- 2: Casing
- 20: Tubular part
- 201: First End
- 202: Second End
- 21: Gas Inlet
- 22: Gas Outlet
- 23: Solid Substance Discharge Port
- 24: Bottom Part
- 25: Space
- 28: Projection
- 3: Rotor
- 30: Rotation Central Axis
- 4: Blade
- 41: First End
- 42: Second End
- 5: Discharge Tubular Part
- 50: Internal Space
- 6: Outlet Tubular Part
- 60: Internal space
- 8: Rectifying structure
- 9: Structure
- 11: Driving Device
- 10: Separation System
- D1: Axial Direction
- R1: Direction of rotation

## Claims

1. A separation device (1, 1a, 1b, 1c, 1d, 1e, 1f, 1g) comprising:
a casing (2) including a tubular part (20) having a circular inner peripheral shape;
a rotor (3) disposed on an inner side of the tubular part (20) and rotatable around a rotation central axis (30) extending along an axial direction (D1) of the tubular part (20); and
a blade (4) disposed between the tubular part (20) and the rotor (3) and configured to rotate together with the rotor (3),
the tubular part (20) including
a gas inlet (21),
a gas outlet (22) apart from the gas inlet (21) in the axial direction (D1) and in communicative connection with an inside and an outside of the tubular part (20) between a first end (201) and a second end (202) of the tubular part (20) in the axial direction (D1), and
the blade (4) having a first end (41) adjacent to the gas inlet (21) and a second end (42) adjacent to the gas outlet (22),
**characterized by**
a solid substance discharge port (23) aligned with the gas outlet (22) in a direction along an outer periphery of the tubular part (20),
the casing (2) having a space (25) extending to the solid substance discharge port (23) with respect to the second end (42) of the blade (4) in the axial direction (D1), and
the separation device (1, 1a, 1b, 1c, 1d, 1e, 1f, 1g) further comprising a discharge tubular part (5) having an inner space (50) in communicative connection with the solid substance discharge port (23) and protruding from an outer peripheral surface (27) of the tubular part (20).

2. The separation device (1, 1a, 1b, 1c, 1d, 1e, 1f, 1g) of claim 1, wherein
the solid substance discharge port (23) of the tubular part (20) has an inner peripheral surface having an inner rear surface (231) located rearward and an inner front surface (232) located frontward in a direction along a rotation direction (R1) of the rotor (3),
the inner rear surface (231) is extended along one tangential direction of an inner peripheral surface (26) of the tubular part (20) when viewed in the axial direction (D1), and
the discharge tubular part (5) protrudes in a direction along the one tangential direction when viewed in the axial direction (D1).

3. The separation device (1, 1a, 1b, 1c, 1d, 1e, 1f, 1g) of claim 1 or 2, further comprising an outlet tubular part (6) having an inner space (60) in communicative connection with the gas outlet (22), the outlet tubular part (6) protruding from the outer peripheral surface (27) of the tubular part (20).

4. The separation device (1, 1a, 1b, 1c, 1d, 1e, 1f, 1g) of any one of claims 1 to 3, wherein
the discharge tubular part (5) is at a location where the discharge tubular part (5) does not overlap the blade (4) in a direction orthogonal to the rotation central axis (30).

5. The separation device (1, 1a, 1b, 1c, 1d, 1e, 1f, 1g) of any one of claims 1 to 4, wherein
the solid substance discharge port (23) has an opening width greater than an opening width of the gas outlet (22) in the axial direction (D1).

6. The separation device (1, 1a, 1b, 1c, 1d, 1e, 1f, 1g) of claim 5, wherein
a distance between the solid substance discharge port (23) and the blade (4) is shorter than a distance between the gas outlet (22) and the blade (4) in a direction along the axial direction (D1).

7. The separation device (1, 1a, 1b, 1c, 1d, 1e, 1f, 1g) of claim 5 or 6, wherein
the opening width of the solid substance discharge port (23) is narrower than the opening width of the gas outlet (22) in the direction along the outer periphery of the tubular part (20).

8. The separation device (1, 1a, 1b, 1c, 1d, 1e, 1f, 1g) of any one of claims 1 to 7, wherein
the tubular part (20) includes a plurality of the solid substance discharge ports (23), and
the separation device (1, 1a, 1b, 1c, 1d, 1e, 1f, 1g) includes a plurality of the discharge tubular parts (5).

9. The separation device (1, 1a, 1b, 1c, 1d, 1e, 1f, 1g) of claim 8, wherein
the discharge tubular parts (5) are arranged to have revolution symmetry when viewed in the axial direction (D1).

10. The separation device (1, 1a, 1b, 1c, 1d, 1e, 1f, 1g) of any one of claims 1 to 9, further comprising a rectifying structure (8) disposed between the gas inlet (21) and the rotor (3) on the inner side of the tubular part (20), the rectifying structure (8) being configured to rectify a flow of a gas flowing in through the gas inlet (21).

11. The separation device (1, 1a, 1b, 1c, 1d, 1e, 1f, 1g) of any one of claims 1 to 10, wherein
the gas inlet (21) penetrates the tubular part (20) in the axial direction (D1).

12. The separation device (1, 1a, 1b, 1c, 1d, 1e, 1f, 1g) of any one of claims 1 to 11, further comprising a structure (9) disposed along the rotation central axis (30) of the rotor (3), wherein
at least part of the structure (9) is disposed in the space (25).

13. The separation device (1a, 1b, 1c) of claim 12, wherein
the casing (2) includes a bottom part (24) which closes an opening of the second end (202) of the tubular part (20),
the structure (9) is integrated with the rotor (3), and
the separation device (1a, 1b, 1c) further includes a projection (28) protruding from the bottom part (24) of the casing (2) toward the space (25) of the casing (2), the projection (28) overlapping the structure (9) when viewed in a direction orthogonal to the rotation central axis (30).

14. The separation device (1b, 1c) described in claim 13, wherein
the structure (9) is tubular, and
the projection (28) is disposed inside the structure (9) when viewed in a direction along the rotation central axis (30).

15. The separation device (1d, 1e, 1f, 1g) of claim 12, wherein
the structure (9) is integrated with the casing (2), and
the structure (9) and the rotor (3) are apart from each other.

16. The separation device (1e, 1f, 1g) of claim 15, wherein
part of the structure (9) overlaps part of the rotor (3) when viewed in a direction orthogonal to the rotation central axis (30).

17. The separation device (1g) of claim 16, wherein
the part of the structure (9) is disposed inside the rotor (3) when viewed in a direction along the rotation central axis (30).

18. A separation system (10) comprising:
the separation device (1, 1a, 1b, 1c, 1d, 1e, 1f, 1g) of any one of claims 1 to 17; and
a driving device (11) configured to rotationally drive the rotor (3).

## Patentansprüche

1. Eine Trennvorrichtung (1, 1a, 1b, 1c, 1d, 1e, 1f, 1g), umfassend:
ein Gehäuse (2), das einen rohrförmigen Teil (20) mit einer kreisförmigen inneren Umfangsform umfasst;
einen Rotor (3), der auf einer Innenseite des rohrförmigen Teils (20) angeordnet ist und um eine Drehmittelachse (30) drehbar ist, die sich entlang einer axialen Richtung (D1) des rohrförmigen Teils (20) erstreckt; und
eine Schaufel (4), die zwischen dem rohrförmigen Teil (20) und dem Rotor (3) angeordnet ist und dazu eingerichtet ist, sich zusammen mit dem Rotor (3) zu drehen,
wobei der rohrförmige Teil (20) enthält:
einen Gaseinlass (21),
einen Gasauslass (22), der in axialer Richtung (D1) vom Gaseinlass (21) entfernt ist und in kommunizierender Verbindung mit einer Innenseite und einer Außenseite des rohrförmigen Teils (20) in axialer Richtung (D1) zwischen einem ersten Ende (201) und einem zweiten Ende (202) des rohrförmigen Teils (20) steht, und
wobei die Schaufel (4) ein erstes Ende (41) angrenzend an den Gaseinlass (21) und ein zweites Ende (42) angrenzend an den Gasauslass (22) aufweist,
**gekennzeichnet durch**
eine Feststoff-Auslassöffnung (23), die mit dem Gasauslass (22) in einer Richtung entlang eines Außenumfangs des rohrförmigen Teils (20) ausgerichtet ist,
wobei das Gehäuse (2) einen Raum (25) aufweist, der sich in Bezug auf das zweite Ende (42) der Schaufel (4) in axialer Richtung (D1) bis zur Feststoff-Auslassöffnung (23) erstreckt, und
die Trennvorrichtung (1, 1a, 1b, 1c, 1d, 1e, 1f, 1g) ferner ein rohrförmiges Ausstoßteil (5) mit einem Innenraum (50) umfasst, der in kommunizierender Verbindung mit der Feststoff-Auslassöffnung (23) steht und von einer äußeren Umfangsfläche (27) des rohrförmigen Teils (20) vorsteht.

2. Die Trennvorrichtung (1, 1a, 1b, 1c, 1d, 1e, 1f, 1g) nach Anspruch 1, wobei
die Feststoff-Auslassöffnung (23) des rohrförmigen Teils (20) eine innere Umfangsfläche mit einer inneren hinteren Fläche (231), die sich hinten befindet, und einer inneren vorderen Fläche (232), die sich vorne in einer Richtung entlang einer Drehrichtung (R1) des Rotors (3) befindet, aufweist,
die innere hintere Fläche (231) sich entlang einer Tangentialrichtung einer inneren Umfangsfläche (26) des rohrförmigen Teils (20) erstreckt, wenn in axialer Richtung (D1) betrachtet, und
das rohrförmige Ausstoßteil (5) in einer Richtung entlang der einen Tangentialrichtung vorsteht, wenn in axialer Richtung (D1) betrachtet.

3. Die Trennvorrichtung (1, 1a, 1b, 1c, 1d, 1e, 1f, 1g) nach Anspruch 1 oder 2, die ferner ein rohrförmiges Auslassteil (6) mit einem Innenraum (60) in kommunizierender Verbindung mit dem Gasauslass (22) umfasst, wobei das rohrförmige Auslassteil (6) von der äußeren Umfangsfläche (27) des rohrförmigen Teils (20) vorsteht.

4. Die Trennvorrichtung (1, 1a, 1b, 1c, 1d, 1e, 1f, 1g) nach einem der Ansprüche 1 bis 3, wobei
das rohrförmige Ausstoßteil (5) sich an einer Stelle befindet, an der das rohrförmige Ausstoßteil (5) die Schaufel (4) in einer Richtung senkrecht zur Rotationsmittelachse (30) nicht überlappt.

5. Die Trennvorrichtung (1, 1a, 1b, 1c, 1d, 1e, 1f, 1g) nach einem der Ansprüche 1 bis 4, wobei
die Feststoff-Auslassöffnung (23) eine Öffnungsweite aufweist, die größer ist als die Öffnungsweite des Gasauslasses (22) in axialer Richtung (D1).

6. Die Trennvorrichtung (1, 1a, 1b, 1c, 1d, 1e, 1f, 1g) nach Anspruch 5, wobei
der Abstand zwischen der Feststoff-Auslassöffnung (23) und der Schaufel (4) in einer Richtung entlang der axialen Richtung (D1) kürzer ist als der Abstand zwischen dem Gasauslass (22) und der Schaufel (4).

7. Die Trennvorrichtung (1, 1a, 1b, 1c, 1d, 1e, 1f, 1g) nach Anspruch 5 oder 6, wobei
die Öffnungsweite der Feststoff-Auslassöffnung (23) in Richtung entlang des Außenumfangs des rohrförmigen Teils (20) schmaler ist als die Öffnungsweite des Gasauslasses (22).

8. Die Trennvorrichtung (1, 1a, 1b, 1c, 1d, 1e, 1f, 1g) nach einem der Ansprüche 1 bis 7, wobei
der rohrförmige Teil (20) mehrere Feststoff-Auslassöffnungen (23) aufweist und die Trennvorrichtung (1, 1a, 1b, 1c, 1d, 1e, 1f, 1g) mehrere rohrförmige Ausstoßteile (5) aufweist.

9. Die Trennvorrichtung (1, 1a, 1b, 1c, 1d, 1e, 1f, 1g) nach Anspruch 8, wobei
die rohrförmigen Ausstoßteile (5) so angeordnet sind, dass sie in axialer Richtung (D1) rotationssymmetrisch sind.

10. Die Trennvorrichtung (1, 1a, 1b, 1c, 1d, 1e, 1f, 1g) nach einem der Ansprüche 1 bis 9, die ferner eine Rektifizierstruktur (8) umfasst, die zwischen dem Gaseinlass (21) und dem Rotor (3) auf der Innenseite des rohrförmigen Teils (20) angeordnet ist, wobei die Rektifizierstruktur (8) dazu eingerichtet ist, einen Gasstrom zu rektifizieren, der durch den Gaseinlass (21) einströmt.

11. Die Trennvorrichtung (1, 1a, 1b, 1c, 1d, 1e, 1f, 1g) nach einem der Ansprüche 1 bis 10, wobei
der Gaseinlass (21) den rohrförmigen Teil (20) in axialer Richtung (D1) durchdringt.

12. Die Trennvorrichtung (1, 1a, 1b, 1c, 1d, 1e, 1f, 1g) nach einem der Ansprüche 1 bis 11, die ferner eine Struktur (9) umfasst, die entlang der Rotationsmittelachse (30) des Rotors (3) angeordnet ist, wobei
zumindest ein Teil der Struktur (9) in dem Raum (25) angeordnet ist.

13. Die Trennvorrichtung (1a, 1b, 1c) nach Anspruch 12, wobei
das Gehäuse (2) einen unteren Teil (24) umfasst, der eine Öffnung des zweiten Endes (202) des rohrförmigen Teils (20) verschließt,
die Struktur (9) in den Rotor (3) integriert ist und
die Trennvorrichtung (1a, 1b, 1c) ferner einen Vorsprung (28) umfasst, der von dem unteren Teil (24) des Gehäuses (2) in Richtung des Raums (25) des Gehäuses (2) vorsteht, wobei der Vorsprung (28) die Struktur (9) überlappt, wenn in einer Richtung senkrecht zur Rotationsmittelachse (30) betrachtet.

14. Die in Anspruch 13 beschriebene Trennvorrichtung (1b, 1c), wobei
die Struktur (9) rohrförmig ist und
der Vorsprung (28) in der Struktur (9) angeordnet ist, wenn in einer Richtung entlang der Rotationsmittelachse (30) betrachtet.

15. Die Trennvorrichtung (1d, 1e, 1f, 1g) nach Anspruch 12, wobei
die Struktur (9) in das Gehäuse (2) integriert ist und
die Struktur (9) und der Rotor (3) voneinander getrennt sind.

16. Die Trennvorrichtung (1e, 1f, 1g) nach Anspruch 15, wobei
ein Teil der Struktur (9) einen Teil des Rotors (3) überlappt, wenn in einer Richtung senkrecht zur Rotationsmittelachse (30) betrachtet.

17. Die Trennvorrichtung (1g) nach Anspruch 16, wobei
der Teil der Struktur (9) in einer Richtung entlang der Rotationsmittelachse (30) gesehen innerhalb des Rotors (3) angeordnet ist.

18. Ein Trennsystem (10), umfassend:
die Trennvorrichtung (1, 1a, 1b, 1c, 1d, 1e, 1f, 1g) nach einem der Ansprüche 1 bis 17; und
eine Antriebsvorrichtung (11), die dazu eingerichtet ist, den Rotor (3) in Rotation zu versetzen.

## Revendications

1. Dispositif de séparation (1, 1a, 1b, 1c, 1d, 1e, 1f, 1g) comprenant :
un boîtier (2) comprenant une partie tubulaire (20) ayant une forme périphérique intérieure circulaire,
un rotor (3) disposé intérieurement à la partie tubulaire (20) et pouvant tourner sur un axe central de rotation (30) s'étendant le long d'une direction axiale (D1) de la partie tubulaire (20), et
une aube (4) disposée entre la partie tubulaire (20) et le rotor (3) et conçue pour tourner conjointement avec le rotor (3) ;
la partie tubulaire (20) comprenant :
une entrée de gaz (21),
une sortie de gaz (22) séparée de l'entrée de gaz (21) dans la direction axiale (D1) et en communication avec l'intérieur et l'extérieur de la partie tubulaire (20) entre une première extrémité (201) et une deuxième extrémité (202) de la partie tubulaire (20) dans la direction axiale (D1) ; et
l'aube (4) ayant une première extrémité (41) adjacente à l'entrée de gaz (21) et une deuxième extrémité (42) adjacente à la sortie de gaz (22) ;
**caractérisé par**
un orifice d'évacuation de substance solide (23) aligné sur la sortie de gaz (22) dans une direction longeant la périphérie extérieure de la partie tubulaire (20),
le boîtier (2) ayant un espace (25) s'étendant jusqu'à l'orifice d'évacuation de substance solide (23) par rapport à la deuxième extrémité (42) de l'aube (4) dans la direction axiale (D1), et
le dispositif de séparation (1, 1a, 1b, 1c, 1d, 1e, 1f, 1g) comprenant en outre une partie tubulaire d'évacuation (5) ayant un espace intérieur (50) en communication avec l'orifice d'évacuation de substance solide (23) et faisant saillie d'une surface périphérique extérieure (27) de la partie tubulaire (20).

2. Dispositif de séparation (1, 1a, 1b, 1c, 1d, 1e, 1f, 1g) selon la revendication 1, dans lequel
l'orifice d'évacuation de substance solide (23) de la partie tubulaire (20) a une surface périphérique intérieure ayant une surface arrière intérieure (231) située vers l'arrière et une surface avant intérieure (232) située vers l'avant dans une direction longeant la direction de rotation (R1) du rotor (3),
la surface arrière intérieure (231) s'étend le long d'une direction tangentielle d'une surface périphérique intérieure (26) de la partie tubulaire (20), vue dans la direction axiale (D1), et
la partie tubulaire d'évacuation (5) fait saillie dans une direction longeant la direction tangentielle, vue dans la direction axiale (D1).

3. Dispositif de séparation (1, 1a, 1b, 1c, 1d, 1e, 1f, 1g) selon la revendication 1 ou 2, comprenant en outre une partie tubulaire de sortie (6) ayant un espace intérieur (60) en communication avec la sortie de gaz (22), la partie tubulaire de sortie (6) faisant saillie de la surface périphérique extérieure (27) de la partie tubulaire (20).

4. Dispositif de séparation (1, 1a, 1b, 1c, 1d, 1e, 1f, 1g) selon l'une quelconque des revendications 1 à 3, dans lequel
la partie tubulaire d'évacuation (5) se trouve à un emplacement où cette partie tubulaire d'évacuation (5) ne se superpose pas à l'aube (4) dans une direction orthogonale à l'axe central de rotation (30).

5. Dispositif de séparation (1, 1a, 1b, 1c, 1d, 1e, 1f, 1g) selon l'une quelconque des revendications 1 à 4, dans lequel
l'orifice d'évacuation de substance solide (23) a une largeur d'ouverture supérieure à la largeur d'ouverture de la sortie de gaz (22) dans la direction axiale (D1).

6. Dispositif de séparation (1, 1a, 1b, 1c, 1d, 1e, 1f, 1g) selon la revendication 5, dans lequel
la distance séparant l'orifice d'évacuation de substance solide (23) et l'aube (4) est plus courte que la distance séparant la sortie de gaz (22) et l'aube (4) dans une direction longeant la direction axiale (D1).

7. Dispositif de séparation (1, 1a, 1b, 1c, 1d, 1e, 1f, 1g) selon la revendication 5 ou 6, dans lequel
la largeur d'ouverture de l'orifice d'évacuation de substance solide (23) est plus étroite que la largeur d'ouverture de la sortie de gaz (22) dans la direction longeant la périphérie extérieure de la partie tubulaire (20).

8. Dispositif de séparation (1, 1a, 1b, 1c, 1d, 1e, 1f, 1g) selon l'une quelconque des revendications 1 à 7, dans lequel
la partie tubulaire (20) comprend une pluralité d'orifices d'évacuation de substance solide (23), et
le dispositif de séparation (1, 1a, 1b, 1c, 1d, 1e, 1f, 1g) comprend une pluralité de parties tubulaires d'évacuation (5).

9. Dispositif de séparation (1, 1a, 1b, 1c, 1d, 1e, 1f, 1g) selon la revendication 8, dans lequel
les parties tubulaires d'évacuation (5) sont agencées de manière à présenter une symétrie de révolution, vues dans la direction axiale (D1).

10. Dispositif de séparation (1, 1a, 1b, 1c, 1d, 1e, 1f, 1g) selon l'une quelconque des revendications 1 à 9, comprenant en outre une structure de rectification (8) disposée entre l'entrée de gaz (21) et le rotor (3) sur le côté intérieur de la partie tubulaire (20), la structure de rectification (8) étant conçue pour rectifier un flux de gaz entrant par l'entrée de gaz (21).

11. Dispositif de séparation (1, 1a, 1b, 1c, 1d, 1e, 1f, 1g) selon l'une quelconque des revendications 1 à 10, dans lequel
l'entrée de gaz (21) pénètre dans la partie tubulaire (20) dans la direction axiale (D1).

12. Dispositif de séparation (1, 1a, 1b, 1c, 1d, 1e, 1f, 1g) selon l'une quelconque des revendications 1 à 11, comprenant en outre une structure (9) disposée le long de l'axe central de rotation (30) du rotor (3), et dans lequel
au moins une partie de la structure (9) est disposée dans ledit espace (25).

13. Dispositif de séparation (1a, 1b, 1c) selon la revendication 12, dans lequel
le boîtier (2) comprend une partie inférieure (24) qui ferme une ouverture de la deuxième extrémité (202) de la partie tubulaire (20),
la structure (9) est intégrée au rotor (3), et
le dispositif de séparation (1a, 1b, 1c) comprend en outre une saillie (28) faisant saillie de la partie inférieure (24) du boîtier (2) vers ledit espace (25) du boîtier (2), la saillie (28) se superposant à la structure (9), vues dans une direction orthogonale à l'axe central de rotation (30).

14. Dispositif de séparation (1b, 1c) selon la revendication 13, dans lequel
la structure (9) est tubulaire, et
la saillie (28) est disposée à l'intérieur de la structure (9), vue dans une direction longeant l'axe central de rotation (30).

15. Dispositif de séparation (1d, 1e, 1f, 1g) selon la revendication 12, dans lequel
la structure (9) est intégrée au boîtier (2), et
la structure (9) et le rotor (3) sont séparés l'un de l'autre.

16. Dispositif de séparation (1e, 1f, 1g) selon la revendication 15, dans lequel
une partie de la structure (9) se superpose à une partie du rotor (3), vues dans une direction orthogonale à l'axe central de rotation (30).

17. Dispositif de séparation (1g) selon la revendication 16, dans lequel
ladite partie de la structure (9) est disposée à l'intérieur du rotor (3), vue dans une direction longeant l'axe central de rotation (30).

18. Système de séparation (10) comprenant :
le dispositif de séparation (1, 1a, 1b, 1c, 1d, 1e, 1f, 1g) selon l'une quelconque des revendications 1 à 17, et
un dispositif d'entraînement (11) conçu pour entraîner en rotation le rotor (3).
